# EUROPÄISCHE PATENTSCHRIFT

(11) **EP 3 367 529 B1**
(45) Veröffentlichungstag und Bekanntmachung des Hinweises auf die Patenterteilung: **18.06.2025**
(21) Anmeldenummer: 18152221.0
(22) Anmeldetag: 18.01.2018
(51) Int. Cl.: H02H 3/087, H02M 3/06, H02H 7/12, H02H 9/02

(54) **VERSORGUNGSEINRICHTUNG FÜR EIN ELEKTRISCHES MODUL MIT SICHERUNGSELEMENT**
SUPPLY DEVICE FOR AN ELECTRICAL MODULE HAVING A SECURING ELEMENT
DISPOSITIF D'ALIMENTATION POUR UN MODULE ÉLECTRIQUE POURVU D'ÉLÉMENT DE SÉCURITÉ

(30) Priorität: 13.02.2017 DE 102017202208
(43) Veröffentlichungstag der Anmeldung: 29.08.2018
(73) Patentinhaber: Siemens Energy Global GmbH & Co. KG, 81739 München (DE)
(72) Erfinder: Böhme, Daniel, 90480 Nürnberg (DE); Euler, Ingo, 91056 Erlangen (DE); Kübel, Thomas, 91056 Erlangen (DE); Pierstorf, Steffen, 90443 Nürnberg (DE); Schmitt, Daniel, 92353 Postbauer-Heng (DE); Schremmer, Frank, 90768 Fürth (DE); Stoltze, Torsten, 91074 Herzogenaurach (DE); Wahle, Marcus, 90587 Veitsbronn (DE)

(56) Entgegenhaltungen:
- EP-A1- 2 549 634
- EP-A1- 3 242 390
- EP-A2- 2 779 346
- WO-A1-2016/108597
- WO-A1-2016/208894
- WO-A2-2009/003834
- DE-A1- 10 103 031
- DE-A1- 19 639 427
- JP-A- H04 265 621
- US-A1- 2014 292 246
- US-B2- 7 453 680

## Beschreibung

Die Erfindung betrifft ein Schaltmodul (2) für einen modularen Mehrstufenumrichter, umfassend Leistungshalbleiterschalter (5) sowie einen Energiespeicher (7).

Elektrische beziehungsweise elektronische Baugruppen, die sich im Betrieb auf einem Hochspannungspotenzial, also auf einem Potenzial von oberhalb 1 kV gegenüber Erdpotenzial befinden, sind beispielsweise aus Umrichteranordnungen bekannt. Eine Umrichteranordnung weist üblicherweise einem Umrichter zugeordnete Kommunikationsbaugruppen und Ansteuerungsbaugruppen zur Ansteuerung von Leistungshalbleiterschaltern des Umrichters. Diese und andere Baugruppen benötigen eine Versorgungsspannung, die im Betrieb der Baugruppe beziehungsweise des Umrichters bereitgestellt werden muss.

Aus der WO 2009/003834 A1 ist eine Versorgungseinrichtung bekannt, die eine Energieversorgungseinheit vorsieht, die auf Erdpotenzial angeordnet ist. Die Energieversorgungseinheit der WO 2009/003834 A1 ist über potenzialtrennende Mittel in Form von Lichtwellenleitern mit der zu versorgenden Baugruppe verbunden. Die Übertragung der Energie von der Energieversorgungseinheit zu der Baugruppe erfolgt mittels der Lichtwellenleiter. Eine solche Übertragung einer Versorgungsenergie vom Erdpotenzial auf Hochspannungspotenzial ist relativ aufwändig und kostenintensiv.

Ein modularer Mehrstufenumrichter mit einer eine Reihenschaltung aus einem Vorwiderstand und einer Versorgungseinheit aufweisenden Versorgungseinrichtung ist aus der WO 2016/108597 A1 bekannt. Die Aufgabe der Erfindung ist es, ein oben genanntes Schaltmodul vorzuschlagen, das möglichst kostengünstig und zuverlässig ist.

Energieversorgungseinrichtungen für einen modularen Mehrstufenumrichter sind in den folgenden Dokumenten offenbart worden: EP2549634A1 und WO2016208894A1.

Die Erfindung löst die Aufgabe durch ein Schaltmodul mit den Merkmalen des Anspruchs 1. Demnach umfasst die Versorgungseinrichtung des Schaltmoduls eine Reihenschaltung aus wenigstens einem Vorwiderstand und einer Versorgungseinheit, wobei die Reihenschaltung mit einem Energiespeicher und die Versorgungseinheit mit der zu versorgenden Baugruppe verbindbar sind, sowie ein Sicherungselement, mittels dessen ein Kurzschlussstrom durch die Versorgungseinheit in einem Kurzschlussfall elektrisch unterbrechbar ist.

Erfindungsgemäß ist die Versorgungseinrichtung demnach im Betrieb wie die zu versorgende Baugruppe auf einem Hochspannungspotenzial angeordnet. Eine Potenzialtrennung zwischen der Versorgungseinrichtung und der Baugruppe entfällt vorteilhaft. Die Energie zur Versorgung der Baugruppe kann mittels der Versorgungseinrichtung dem Energiespeicher auf Hochspannungspotenzial entnommen und der Baugruppe zur Verfügung gestellt werden. Auf diese Weise können vorteilhaft auch elektrische Baugruppen mit Energie versorgt werden, die nicht vom Erdpotenzial versorgt werden können.

Das Sicherungselement erfüllt eine Sicherungsfunktion für den Fall eines Fehlers in oder an der Versorgungseinheit. Bei einem Kurzschluss in der Versorgungseinheit kann es zu einem Kurzschlussstrom durch die Versorgungseinheit kommen. Der Kurzschlussstrom kann dabei zu einer thermischen Überlastung des Vorwiderstandes führen. In einem solchen Fall unterbricht das Sicherungselement diesen Kurzschlussstrom und verhindert vorteilhaft die Überlastung. Auf diese Weise kann ein Isolationsversagen des Vorwiderstandes und damit eine Zerstörung der gesamten Versorgungseinheit sowie angrenzender Bauteile verhindert werden. Das Sicherungselement ist geeigneterweise in Reihe zum Vorwiderstand und zur Versorgungseinheit angeordnet. Die Unterbrechung des Kurzschlussstromes kann beispielsweise durch eine Unterbrechung der Reihenschaltung erreicht werden. Der Kurzschlussstrom ist jedenfalls unterbrochen, wenn ein den Kurzschlussstrom führender Strompfad unterbrochen ist.

Der Energiespeicher ist geeigneterweise ein Kondensator oder eine Batterie oder eine Reihenschaltung von Kondensatoren und/oder Batterien. Der Energiespeicher ist über dessen Klemmen mit der Reihenschaltung verbunden bzw. verbindbar. Zur Verbindung mit dem Energiespeicher umfasst die Reihenschaltung Anschlussklemmen, zwischen denen sich die Reihenschaltung erstreckt.

Bevorzugt unterbricht das Sicherungselement die Reihenschaltung, sobald ein Strom durch die Reihenschaltung einen vorbestimmten Strom-Maximalwert beziehungsweise Schwellenwert überschreitet. Damit ist sichergestellt, dass in einem Kurzschlussfall, beispielsweise einem Kurzschluss an den Klemmen der Versorgungseinheit, eine schnelle Unterbrechung der Reihenschaltung erreicht wird.

Das Sicherungselement ist rein passiv. Ein rein passives Sicherungselement braucht seinerseits keine zusätzliche Energieversorgung oder Ansteuerung und ist daher besonders kostengünstig und einfach im Aufbau.

Beispielsweise kann das Sicherungselement einen Sicherungsdraht umfassen, der im Kurzschlussfall durchtrennbar ist. Der Sicherungsdraht ist zweckmäßigerweise derart ausgelegt und dimensioniert, dass er bei einem Strom, der einen vorbestimmten Stromwert überschreitet, durchtrennt oder auf andere Weise funktionsunfähig wird. Auf diese Weise wird die Reihenschaltung elektrisch sicher unterbrochen. Der Sicherungsdraht ist geeigneterweise in der Reihenschaltung, beispielsweise zwischen dem Vorwiderstand und der Versorgungseinheit, angeordnet. Der Sicherungsdraht ist weiterhin derart ausgelegt, dass eine Durchtrennung bei Nennbedingungen (insbesondere bei einem Nennstrom durch die Reihenschaltung) nicht erfolgt.

Bevorzugt ist das Sicherungselement ein Opferelement. Das Opferelement unterbricht die Reihenschaltung, wobei es seine Funktionsfähigkeit dauerhaft verliert, so dass diese nicht wiederhergestellt werden kann. Damit kann zugleich eine besonders zuverlässige Trennung bzw. Unterbrechung der elektrischen Reihenschaltung erreicht werden.

Als besonders vorteilhaft wird angesehen, wenn das Sicherungselement derart ausgelegt ist, dass es im Kurzschlussfall zumindest teilweise verdampft. Auf diese Weise bleiben nach der Unterbrechung der Reihenschaltung keine Teile in der Versorgungseinrichtung, die entsprechend entsorgt werden müssten.

Eine besonders kompakte Form des Sicherungselements kann dadurch erreicht werden, wenn das Sicherungselement in den Vorwiderstand integriert ist, beispielsweise in ein Gehäuse des Vorwiderstandes.

Zudem kann der wenigstens eine Vorwiderstand als ein Flachwiderstand realisiert sein. In Reihe zum Vorwiderstand können weitere Vorwiderstände angeordnet sein.

Gemäß einer Ausführungsform der Erfindung umfasst die Versorgungseinheit ein ansteuerbares, ein- und ausschaltbares Schaltelement. Das Schaltelement kann beispielsweise ein IGBT, ein MOSFET oder dergleichen sein. Die Versorgungseinheit kann auch eine Reihenschaltung mehrerer solcher Schaltelemente umfassen.

Vorzugsweise ist das Schaltelement mittels einer Ansteuereinheit pulsartig ansteuerbar. Das Schaltelement wird dabei im Betrieb in kurzen Zeitabständen ein- und ausgeschaltet. Gemäß einer Variante kann das Schaltelement mittels der Ansteuereinheit eingeschaltet werden, wenn eine Versorgungsspannung zur Versorgung der Baugruppe einen vorbestimmten Spannungsschwellwert unterschreitet. Entsprechend kann ausgeschaltet bzw. gesperrt werden, wenn die Versorgungsspannung einen weiteren Spannungsschwellwert überschreitet. Auf diese Weise ist eine Zweipulsansteuerung bereitgestellt, die eine Überspannung an der zu versorgenden Baugruppe verhindert und zugleich Leistung aus dem Energiespeicher nach Bedarf bereitstellen kann.

Eine besonders einfache und zuverlässige Ausführungsform der Erfindung ergibt sich beispielsweise, wenn die Reihenschaltung sich zwischen einer ersten und einer zweiten hochspannungsseitigen Anschlussklemme erstreckt, die zum Anschluss an den Energiespeicher eingerichtet sind, wobei der Vorwiderstand direkt mit der ersten Anschlussklemme verbunden ist, und wobei die Versorgungseinheit ein Schaltnetzteil umfasst, dass ein ein- und ausschaltbares Schaltelement sowie einen Spannungsabgriff umfasst, die miteinander in einer Reihenschaltung verbunden sind, wobei ein erster Anschluss des Schaltnetzteils mit dem Vorwiderstand und ein zweiter Anschluss des Schaltnetzteils mit der zweiten Anschlussklemme verbunden sind, wobei am Spannungsabgriff eine erste und eine zweite niederspannungsseitige Anschlussklemme zum Verbinden mit der zu versorgenden Baugruppe angeordnet sind.

Bevorzugt ist ein Widerstandselement vorgesehen, das parallel zur Schalteinheit oder zum Schaltnetzteil angeordnet ist. Das zusätzliche Widerstandselement und der Vorwiderstand können gemeinsam die zusätzliche Funktion eines Entladewiderstandes für den Energiespeicher bereitstellen.

Vorzugsweise erstreckt sich die Reihenschaltung zwischen einer ersten und einer zweiten hochspannungsseitigen Anschlussklemme (X1, X2), die zum Anschluss an den Energiespeicher eingerichtet sind, wobei die Versorgungseinheit einen variablen Widerstand sowie in Reihe dazu einen Spannungsabgriff umfasst, und wobei das Sicherungselement in Reihe zur Versorgungseinheit angeordnet ist. Der variable Widerstand ist zweckmäßigerweise durch ein Widerstandselement realisiert, dessen Widerstandswert variabel einstellbar ist.

Geeigneterweise ist die Versorgungseinrichtung ausgangsseitig beziehungsweise energiespeicherseitig für eine Spannung von 1 kV bis 20 kV ausgelegt. Damit können vorteilhaft auch Energiespeicher von Umrichtern in Hochspannungsanlagen für die Versorgungseinrichtung eingesetzt werden. Zweckmäßigerweise ist die Versorgungseinrichtung niederspannungsseitig für eine Spannung von 100 V bis 1 kV ausgelegt. Die Versorgungseinrichtung weist eine Niederspannungsseite auf, die mit der zu versorgenden Baugruppe verbindbar bzw. verbunden ist. Niederspannungsseitig kann die Versorgungseinrichtung damit eine Versorgungsspannung zwischen 100 V und 1 kV bereitstellen.

Die Versorgungseinheit kann kaskadiert ausgeführt sein. Dabei ist beispielsweise wenigstens ein weiteres Netzteil parallel zum Schaltelement angeordnet. Mittels des weiteren Netzteils kann die Spannung niederspannungsseitig anwendungsbezogen weiter reduziert werden.

Die Erfindung ist besonders geeignet, in einem modularen Mehrstufenumrichter eingesetzt zu werden. Ein modularer Mehrstufenumrichter umfasst jeweils sich zwischen einem Gleichspannungspol und einem Wechselspannungsanschluss oder zwischen zwei Wechselspannungsanschlüssen erstreckende Umrichterarme. Jeder Umrichterarm weist eine Reihenschaltung mehrerer zweipoliger Schaltmodule auf. Jedes Schaltmodul umfasst einen Energiespeicher sowie eine Mehrzahl von Leistungshalbleiterschalteinheiten auf, die je einen ein- und ausschaltbaren, ansteuerbaren Halbleiterschalter aufweisen. In jedem der Schaltmodule müssen Ansteuerbaugruppen zur Ansteuerung der Halbleiterschalter und die Kommunikationsbaugruppen mit Energie versorgt werden. Die Energieversorgung wird günstigerweise realisiert, indem Energie aus dem Energiespeicher des Schaltmoduls selbst entnommen wird. Die Schaltmodule können beispielsweise als Halbbrückenschaltungen oder Vollbrückenschaltungen realisiert sein.

Gemäß der Erfindung ist ein solches Schaltmodul für einen modularen Mehrstufenumrichter bereitgestellt, das Leistungshalbleiterschalter sowie einen Energiespeicher umfasst, wobei parallel zum Energiespeicher die Versorgungseinrichtung geschaltet ist.

Ein besonderer Vorteil dieser Anwendung ist der mittels des Sicherungselements bereitgestellte Schutz vor Beschädigungen des Schaltmoduls bei Kurzschlüssen am oder im Energiespeicher.

Die Erfindung soll im Folgenden anhand von Figuren 1 bis 3 weiter erläutert werden.

Figur 1 zeigt ein Ausführungsbeispiel eines erfindungsgemäßen Schaltmoduls mit einer Versorgungseinrichtung in einer schematischen Darstellung;

Figur 2 zeigt das Ausführungsbeispiel der Figur 1 in einem Kurzschlussfall in einer schematischen Darstellung;

Figur 3 zeigt ein weiteres Ausführungsbeispiel einer Versorgungseinrichtung.

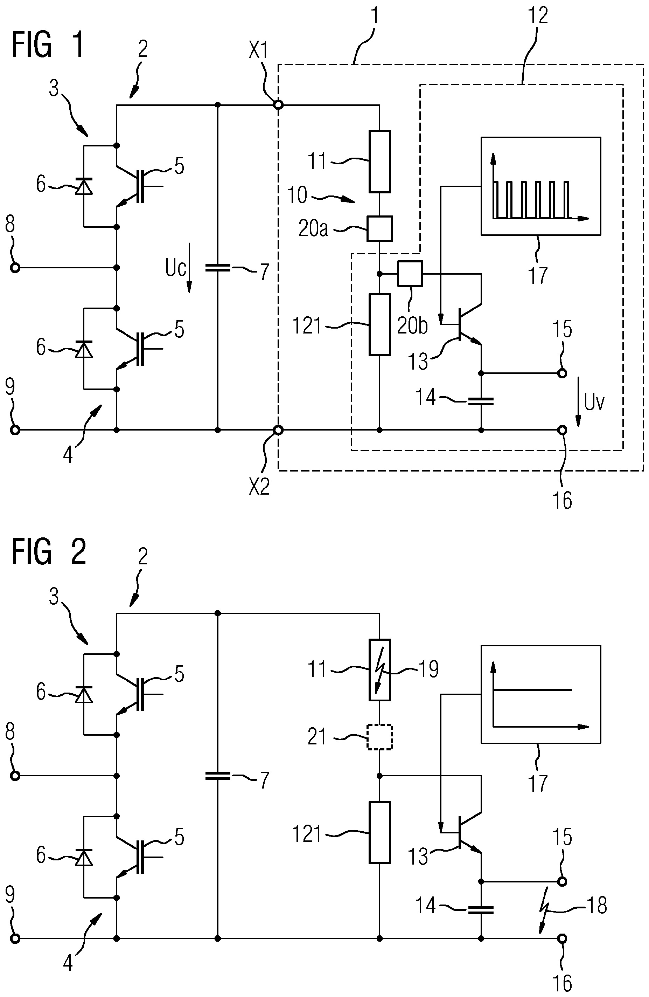

Im Einzelnen ist in Figur 1 eine Versorgungseinrichtung 1 für ein Schaltmodul 2 eines modularen Mehrstufenumrichters dargestellt. Das Schaltmodul 2 ist in einer Halbbrückenschaltung aufgebaut. Das Schaltmodul 2 umfasst damit eine Reihenschaltung mit einer ersten Leistungshalbleiterschalteinheit 3 und einer zweiten Leistungshalbleiterschalteinheit 4, die jeweils einen Halbleiterschalter 5 und eine Freilaufdiode 6 umfassen. Parallel zu den beiden Leistungshalbleiterschalteinheiten ist ein Energiespeicher 7 in Form eines Kondensators angeordnet. Die Schalteinheit 2 ist mittels ihrer Klemmen 8 und 9 mit weiteren baugleichen Schalteinheiten in einer Reihenschaltung verbunden. Im Betrieb des modularen Mehrstufenumrichters liegt das Schaltmodul 2 auf einem üblicherweise nicht konstanten Hochspannungspotenzial. Am Energiespeicher 7 fällt eine Spannung Uc von etwa 3 kV ab.

Die Versorgungseinrichtung 1 umfasst eine Reihenschaltung 10 aus einem Vorwiderstand 11 und einer Versorgungseinheit 12. Die Versorgungseinheit 12 umfasst eine Parallelschaltung eines weiteren Widerstandselementes 121 mit einem Schaltelement 13. Das Schaltelement 13 ist im dargestellten Ausführungsbeispiel ein IGBT (,integrated gate bipolar transistor'). Die Reihenschaltung 10 ist hochspannungsseitig in einer Parallelschaltung mit dem Energiespeicher 7 verbunden.

Die Versorgungseinheit 12 umfasst im dargestellten Ausführungsbeispiel ferner einen Spannungsabgriff in Form eines Mittelspannungskondensators 14. An dem Mittelspannungskondensator 14 sind niederspannungsseitige Anschlussklemmen 15, 16 angeordnet. Mit den Anschlussklemmen 15, 16 kann die Versorgungseinrichtung 1 mit der zu versorgenden Baugruppe verbunden werden. An den Anschlussklemmen 15, 16 liegt im Betrieb eine Versorgungsspannung Uv von 200 V an. Falls je nach Baugruppe auch eine niedrigere Versorgungsspannung, beispielsweise von 15 V benötigt ist, können die Anschlussklemmen mit einem weiteren Netzteil verbunden sein, das die Spannung von 200 V auf 15 V transformieren kann.

Das Gate des Schaltelements 13 ist mit einer Ansteuerung 17 verbunden. Mittels der Ansteuerung 17 wird das Öffnen und Schließen bzw. Sperren der Schalteinheit 13 gesteuert. Das Ansteuern erfolgt in Abhängigkeit von der an dem Spannungsabgriff 14 abfallenden Spannung. Unterschreitet die Versorgungsspannung Uv einen vorgegebenen Schwellwert, so wird das Schaltelement 13 eingeschaltet. Wird der vorgegebene Schwellwert überschritten, so wird das Schaltelement 13 gesperrt. Auf diese Weise ergibt sich eine pulsartige Ansteuerung des Schaltelements 13.

Zwischen dem Vorwiderstand 11 und der Versorgungseinheit 12 ist ein Sicherungselement 20a angeordnet. Das Sicherungselement 20a ist dazu vorgesehen, die Reihenschaltung 10 in einem Fehlerfall zu unterbrechen. Das Sicherungselement 20a umfasst ein Opferelement, das derart ausgelegt ist, dass es bei Überschreitung eines Strom-Schwellenwertes durch die Reihenschaltung 10 verdampft, wobei die elektrische Verbindung zwischen Vorwiderstand 11 und Versorgungseinheit 12 getrennt wird. Alternativ oder in Kombination zum Sicherungselement 20a umfasst die Versorgungseinrichtung ein Sicherungselement 20b, das innerhalb der Versorgungseinheit 12 angeordnet ist. Im Fehlerfall unterbricht das Sicherungselement 20b den Kurzschlussstrom durch das fehlerhafte Schaltelement 13. Die Sicherungselemente 20a, b sind im dargestellten Ausführungsbeispiel gleich aufgebaut.

In Figur 2 sind die Versorgungseinrichtung 1 und das Schaltmodul 2 der Figur 1 in einem Fehlerfall dargestellt. Der mittels des Pfeils 18 angedeutete Kurzs chluss aufgrund eines Fehlers im Mittelspannungskondensator 14 oder an den Anschlussklemmen 15, 16 führt zu einem Abfall der Versorgungsspannung Uv auf null. Die Ansteuerung 17 hält das Schaltelement 13 in diesem Fall dauerhaft geöffnet. Dies führt wiederum zu einem Kurzschlussstrom 19 durch den Vorwiderstand 11 und kann zu dessen thermischer Überlastung führen.

Der Kurzschlussstrom 19 ist höher als der Strom-Schwellenwert des Sicherungselements 20a. In dem beschriebenen Fehlerfall verdampft das Sicherungselement 20a, was in Figur 2 durch eine unterbrochene Linie 21 angedeutet ist. Der Kurzschlussstrom 19 wird auf diese Weise unterbrochen, bevor die thermische Überlastung des Vorwiderstandes 11 zu Schäden an der Versorgungseinrichtung 1 oder dem Schaltmodul 2 führen kann. Die Wirkungsweise des Sicherungselementes 206 ist entsprechend.

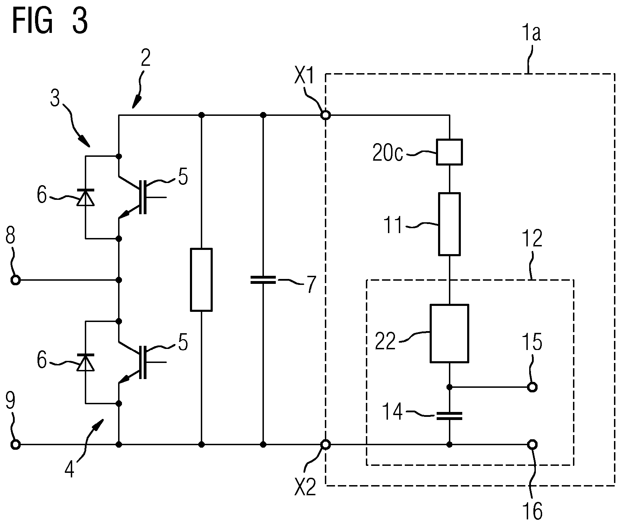

Figur 3 zeigt eine Versorgungseinrichtung 1a. Gleiche und gleichartige Elemente sind dabei in den Figuren 1 bis 3 mit gleichen Bezugszeichen versehen.

Ein Sicherungselement 20c ist in Reihe mit der Versorgungseinheit 12 angeordnet. Der Aufbau des Sicherungselementes 20c entspricht demjenigen des Sicherungselementes 20a. In Reihe zum Spannungsabgriff 14 ist ein variabler Widerstand 22 angeordnet. Der variable Widerstand 22 kann Schalterelemente, wie Halbleiterschalter, umfassen, mittels der der Widerstandswert des variablen Widerstandes 22 erhöht oder abgesenkt werden kann.

Das Schaltmodul 2 kann einen Entladewiderstand für den Energiespeicher umfassen, der parallel zum Energiespeicher 7 angeordnet ist.

## Patentansprüche

1. Schaltmodul (2) für einen modularen Mehrstufenumrichter, umfassend Leistungshalbleiterschalter (5) sowie einen Energiespeicher (7),
das Schaltmodul beinhaltet
eine parallel zum Energiespeicher (7) geschaltete Versorgungseinrichtung (1) zur elektrischen Versorgung einer elektrischen Baugruppe auf einem Hochspannungspotenzial, mit
- einer Reihenschaltung (10) aus wenigstens einem Vorwiderstand (11) und einer Versorgungseinheit (12), wobei die Reihenschaltung (10) in einer Parallelschaltung mit dem Energiespeicher (7) verbunden ist und die Versorgungseinheit (12) in einer Parallelschaltung mit der zu versorgenden Baugruppe verbindbar ist, die Versorgungseinrichtung ist **dadurch gekennzeichnet, dass** sie ein zwischen dem Vorwiderstand und der Versorgungseinrichtung angeordnetes Sicherungselement (20a) beinhaltet, mittels dessen ein Kurzschlussstrom durch die Versorgungseinheit (12) in einem Kurzschlussfall elektrisch unterbrechbar ist, wobei das Sicherungselement (20a) rein passiv ist.

2. Schaltmodul nach Anspruch 1, wobei das Sicherungselement (20) die Reihenschaltung (10) unterbricht, sobald ein Strom durch die Reihenschaltung (10) einen vorbestimmten Strom-Maximalwert überschreitet.

3. Schaltmodul nach einem der vorangehenden Ansprüche, wobei das Sicherungselement (20) einen Sicherungsdraht umfasst, der im Kurzschlussfall durchtrennbar ist.

4. Schaltmodul nach einem der vorangehenden Ansprüche, wobei das Sicherungselement (20) ein Opferelement ist.

5. Schaltmodul nach einem der vorangehenden Ansprüche, wobei das Sicherungselement (20) derart ausgelegt ist, dass es im Kurzschlussfall zumindest teilweise verdampft.

6. Schaltmodul nach einem der vorangehenden Ansprüche, wobei das Sicherungselement (20) in den Vorwiderstand (11) integriert ist.

7. Schaltmodul nach einem der vorangehenden Ansprüche, wobei der wenigstens eine Vorwiderstand (11) ein Flachwiderstand ist.

8. Schaltmodul nach einem der vorangehenden Ansprüche, wobei die Versorgungseinheit (12) ein ein- und ausschaltbares Schaltelement (13) umfasst.

9. Schaltmodul nach Anspruch 8, wobei das Schaltelement (13) mittels einer Ansteuereinheit (17) pulsartig ansteuerbar ist.

10. Schaltmodul nach einem der vorangehenden Ansprüche, wobei die Reihenschaltung (10) sich zwischen einer ersten und einer zweiten hochspannungsseitigen Anschlussklemme (X1, X2) erstreckt, die zum Anschluss an den Energiespeicher (7) eingerichtet sind, wobei der Vorwiderstand (11) direkt mit der ersten Anschlussklemme (X1) verbunden ist, und wobei die Versorgungseinheit (12) ein Schaltnetzteil (13,14) umfasst, das ein ein- und ausschaltbares Schaltelement (13) sowie einen Spannungsabgriff (14) umfasst, die miteinander in einer Reihenschaltung verbunden sind, wobei ein erster Anschluss des Schaltnetzteils (13,14) mit dem Vorwiderstand (11) und ein zweiter Anschluss des Schaltnetzteils (13,14) mit der zweiten Anschlussklemme (X2) verbunden sind, wobei am Spannungsabgriff (14) eine erste und eine zweite niederspannungsseitige Anschlussklemme (15,16) zum Verbinden mit der zu versorgenden Baugruppe angeordnet sind.

11. Schaltmodul nach einem der Ansprüche 8 bis 10, wobei ein Widerstandselement (121) vorgesehen ist, das parallel zur Schalteinheit (13) oder parallel zum Schaltnetzteil angeordnet ist.

12. Schaltmodul nach einem der vorangehenden Ansprüche 1 - 7, wobei die Reihenschaltung (10) sich zwischen einer ersten und einer zweiten hochspannungsseitigen Anschlussklemme (X1, X2) erstreckt, die zum Anschluss an den Energiespeicher (7) eingerichtet sind, wobei die Versorgungseinheit einen variablen Widerstand sowie in Reihe dazu einen Spennungsabgriff (14) umfasst, und wobei das Sicherungselement in Reihe zur Versorgungseinheit angeordnet ist.

13. Schaltmodul nach einem der vorangehenden Ansprüche, wobei die Versorgungseinrichtung (1) energiespeicherseitig für eine Spannung von 1 kV bis 20 kV ausgelegt ist.

14. Schaltmodul nach einem der vorangehenden Ansprüche, wobei die Versorgungseinrichtung (1) ausgangsseitig für eine Spannung von 100 V bis 1 kV ausgelegt ist.

## Claims

1. Switching module (2) for a modular multistage converter, comprising power semiconductor switches (5) and an energy store (7), the switching module containing a supply device (1), connected in parallel with the energy store (7), for supplying electrical power to an electrical assembly at a high-voltage potential, having
- a series circuit (10) composed of at least one series resistor (11) and a supply unit (12), wherein the series circuit (10) is connected in parallel with the energy store (7) and the supply unit (12) can be connected in parallel with the assembly that is to be supplied with power, the supply device being **characterized in that** it contains a fuse element (20a) arranged between the series resistor and the supply device, by means of which fuse element a short-circuit current through the supply unit (12) can be electrically interrupted in the event of a short circuit, wherein the fuse element (20a) is purely passive.

2. Switching module according to Claim 1, wherein the fuse element (20) interrupts the series circuit (10) as soon as a current through the series circuit (10) exceeds a predetermined maximum current value.

3. Switching module according to either one of the preceding claims, wherein the fuse element (20) comprises a fuse wire, which can be severed in the event of a short circuit.

4. Switching module according to any one of the preceding claims, wherein the fuse element (20) is a sacrificial element.

5. Switching module according to any one of the preceding claims, wherein the fuse element (20) is designed in such a way that it at least partly evaporates in the event of a short circuit.

6. Switching module according to any one of the preceding claims, wherein the fuse element (20) is integrated into the series resistor (11).

7. Switching module according to any one of the preceding claims, wherein the at least one series resistor (11) is a flat resistor.

8. Switching module according to any one of the preceding claims, wherein the supply unit (12) comprises a switching element (13) that can be switched on and off.

9. Switching module according to Claim 8, wherein the switching element (13) can be actuated in a pulse-like manner by means of an actuation unit (17).

10. Switching module according to any one of the preceding claims, wherein the series circuit (10) extends between a first and a second high-voltage-side connection terminal (X1, X2), which are configured for connection to the energy store (7), wherein the series resistor (11) is connected directly to the first connection terminal (X1), and wherein the supply unit (12) comprises a switched-mode power supply (13, 14), which comprises a switching element (13) that can be switched on and off and a voltage tap (14), which are connected to one another in a series circuit, wherein a first connection of the switched-mode power supply (13, 14) is connected to the series resistor (11) and a second connection of the switched-mode power supply (13, 14) is connected to the second connection terminal (X2), wherein a first and a second low-voltage-side connection terminal (15, 16) are arranged at the voltage tap (14) for connection to the assembly that is to be supplied with power.

11. Switching module according to any one of Claims 8 to 10, wherein a resistance element (121) arranged in parallel with the switching unit (13) or in parallel with the switched-mode power supply is provided.

12. Switching module according to any one of the preceding Claims 1-7, wherein the series circuit (10) extends between a first and a second high-voltage-side connection terminal (X1, X2), which are configured for connection to the energy store (7), wherein the supply unit comprises a variable resistor and a voltage tap (14) in series with said variable resistor, and wherein the fuse element is arranged in series with the supply unit.

13. Switching module according to any one of the preceding claims, wherein the supply device (1) is dimensioned on the energy store side for a voltage of 1 kV to 20 kV.

14. Switching module according to any one of the preceding claims, wherein the supply device (1) is dimensioned on the output side for a voltage of 100 V to 1 kV.

## Revendications

1. Module (2) de coupure pour un convertisseur modulaire à plusieurs étages, comprenant un interrupteur (5) à semiconducteur de puissance ainsi qu'un accumulateur (7) d'énergie,
le module de coupure comporte
un dispositif (1) d'alimentation monté en parallèle à l'accumulateur (7) d'énergie pour l'alimentation électrique d'un module électrique à un potentiel de haute tension, comprenant
- un circuit (10) série composé d'au moins une résistance (11) supplémentaire et d'une unité (12) d'alimentation, dans lequel le circuit (10) série est monté suivant un circuit parallèle avec l'accumulateur (7) d'énergie et l'unité (12) d'alimentation peut être montée suivant un circuit parallèle avec le module à alimenter, le dispositif d'alimentation est **caractérisé en ce qu'**il comporte un élément (20a) de sécurité monté entre la résistance supplémentaire et le dispositif d'alimentation,
au moyen duquel un courant de court-circuit peut être interrompu électriquement par l'unité (12) de court-circuit dans le cas d'un court-circuit, dans lequel l'élément (20a) de sécurité est purement passif.

2. Module de coupure suivant la revendication 1, dans lequel l'élément (20) de sécurité interrompt le circuit (10) série dès qu'un courant dans le circuit (10) série dépasse une valeur maximum de courant déterminée à l'avance.

3. Module de coupure suivant l'une des revendications précédentes, dans lequel l'élément (20) de sécurité comprend un fil de sécurité, qui peut être coupé en cas de court-circuit.

4. Module de coupure suivant l'une des revendications précédentes, dans lequel l'élément (20) de sécurité est un élément sacrificiel.

5. Module de coupure suivant l'une des revendications précédentes, dans lequel l'élément (20) de sécurité est conçu pour s'évaporer au moins en partie en cas de court-circuit.

6. Module de coupure suivant l'une des revendications précédentes, dans lequel l'élément (20) de sécurité est intégré à la résistance (11) supplémentaire.

7. Module de coupure suivant l'une des revendications précédentes, dans lequel la au moins une résistance (11) supplémentaire est une résistance plate.

8. Module de coupure suivant l'une des revendications précédentes, dans lequel l'unité (12) d'alimentation comprend un élément (13) de coupure pouvant être mis en circuit et hors circuit.

9. Module de coupure suivant la revendication 8, dans lequel l'élément (13) de coupure peut être commandé de manière pulsée au moyen d'une unité (17) de commande.

10. Module de coupure suivant l'une des revendications précédentes, dans lequel le circuit (10) série s'étend entre une première et une deuxième bornes (X1, X2) de connexion du côté de la haute tension, qui sont agencées pour la connexion à l'accumulateur (7) d'énergie, dans lequel la résistance (11) supplémentaire est connectée directement à la première borne (X1) de connexion, et dans lequel l'unité (12) d'alimentation comprend un bloc (13, 14) d'alimentation secteur, qui comprend un élément (13) de coupure pouvant être mis en et hors circuit ainsi qu'une prise (14) de tension, qui sont connectés entre eux en un circuit série, dans lequel une première borne (13, 14) du bloc d'alimentation secteur est connecté à la résistance (11) supplémentaire et une deuxième borne du bloc (13, 14) d'alimentation secteur est connectée à la borne (X2) de connexion, dans lequel, à la prise (14) de tension, sont connectées une première et une deuxième bornes (15, 16) de connexion du côté de la basse tension pour la connexion au module alimenté.

11. Module de coupure suivant l'une des revendications 8 à 10, dans lequel il est prévu un élément (121) de résistance, qui est monté en parallèle avec l'unité (13) de coupure ou en parallèle avec le bloc d'alimentation secteur.

12. Module de coupure suivant l'une des revendications 1 à 7 précédentes, dans lequel le circuit (10) série s'étend entre une première et une deuxième bornes (X1, X2) de connexion du côté de la haute tension, qui sont agencées pour la connexion à l'accumulateur (7) d'énergie, dans lequel l'unité d'alimentation comprend une résistance variable ainsi qu'une prise (14) de tension montée en série avec celle-ci, et dans lequel l'unité de sécurité est montée en série avec l'unité d'alimentation.

13. Module de coupure suivant l'une des revendications précédentes, dans lequel le dispositif (1) d'alimentation est conçu pour une tension de 1 kV à 20 kV du côté de l'accumulateur d'énergie.

14. Module de coupure suivant l'une des revendications précédentes, dans lequel le dispositif (1) d'alimentation est conçu pour une tension de 100 V à 1 kV du côté de la sortie.
